# EUROPÄISCHE PATENTSCHRIFT

(11) **EP 1 892 188 B1**
(45) Veröffentlichungstag und Bekanntmachung des Hinweises auf die Patenterteilung: **06.07.2011**
(21) Anmeldenummer: 07009910.6
(22) Anmeldetag: 18.05.2007
(51) Int. Cl.: B65B 9/20, B65B 51/22, B29C 65/08, B29C 53/50

(54) **Vorrichtung zum Verschweissen der Längsränder eines Beutelzuschnitts**
Device for welding the lateral sides of a bag blank
Dispositif de soudage des bords longitudinaux d'une ébauche de sachet

(30) Priorität: 25.08.2006 DE 102006041966
(43) Veröffentlichungstag der Anmeldung: 27.02.2008
(73) Patentinhaber: Herrmann Ultraschalltechnik GmbH & Co. KG, 76307 Karlsbad-Ittersbach (DE)
(72) Erfinder: Möglich, Hartmut, 76275 Ettlingen (DE)
(74) Vertreter: Steimle, Josef

(56) Entgegenhaltungen:
- EP-A- 1 338 512
- GB-A- 2 048 765
- US-A- 4 950 345
- US-B1- 6 599 389

## Beschreibung

Die Erfindung betrifft eine Vorrichtung zum Verschweißen der Längskanten bzw. Längsränder eines Beutelzuschnitts zu einer Längsnaht eines flexiblen Beutels mittels Ultraschall, mit einer Sonotrode und einem Amboss sowie einem Füllrohr zum Befüllen des noch offenen Beutels.

Vorrichtungen zum Herstellen von Schlauchbeuteln sind vielfach bekannt, zum Beispiel aus der DE 103 47 015 A1 sowie aus der WO 02/102 664 A1. Bei der letztgenannten Druckschrift wird der Beutelzuschnitt zu einem horizontalen Schlauch geformt und die beiden Längsränder über einen Stehfalz miteinander verbunden. Dieser Falz steht von der Oberfläche des Schlauchs in der Regel senkrecht ab. Zur, Herstellung des Falzes wird eine Ultraschallschweißvorrichtung verwendet, mit welcher das thermoplastische Material des Beutelzuschnitts, insbesondere die beiden Längsränder, dicht miteinander verschweißt werden.

Bei der DE 103 47 015 A1 wird der Beutelzuschnitt ebenfalls zu einem vertikalen Schlauch gebogen, jedoch wird kein Falz, sondern eine Überlappnaht hergestellt. In den Schlauch ragt ein Befüllrohr, welches zum Befüllen des einzelne Beutel unterteilten Schlauchs dient. Radial von außen greift an den beiden sich überlappenden Längsrändern eine Sonotrode an und verschweißt die beiden Längsränder, wobei das Befüllrohr als Amboss dient. Ein derart hergestellter Schlauch mit einer Überlappnaht besitzt den Vorteil, dass gegenüber einem Schlauch mit einem abstehenden Falz weniger Schlauchmaterial benötigt wird. Dies wirkt sich um so gravierender aus, je kleiner der Querschnitt beziehungsweise Durchmesser des Schlauches ist.

Als nachteilig hat sich bei der Vorrichtung zum Herstellen der Überlappnaht gemäß der DE 103 47 015 A1 herausgestellt, dass die Schweißergebnisse nicht zufriedenstellend sind, da das Füllrohr sich für den Einsatz als Amboss nicht eignet. Es entsteht eine starke Geräuschentwicklung aufgrund von Resonanzschwingungen des Füllrohrs, was auch in Schwingungen im Haltersystem des Ultraschallschwingers und in der Maschine resultiert. Die Schwingungen des Füllrohrs führen auch zu unterschiedlich großen Spaltweiten zwischen dem Füllrohr und der Sonotrode, weshalb ein konstanter und regelbarer Schweißvorgang nicht erreichbar ist. Außerdem bedarf es noch weiterer Vorrichtungen zum Führen der miteinander zu verschweißenden Längsränder des Beutelzuschnitts.

Der Erfindung liegt daher die Aufgabe zugrunde, eine Vorrichtung zum Verschweißen der Längsränder eines Beutelzuschnitts zu einer Längsnaht eines flexiblen Beutels bereitzustellen, welche zufriedenstellend arbeitet und konstant gute Schweißergebnisse erzielt.

Diese Aufgabe wird mit einer Vorrichtung gelöst, die die Merkmale des Anspruchs 1 aufweist.

Bei der erfindungsgemäßen Vorrichtung ist zusätzlich zum Füllrohr ein Amboss vorgesehen, welcher Führungsabschnitte aufweist, in denen die miteinander zu verschweißenden Längsränder des Beutelzuschnitts geführt werden. Der separate Amboss besitzt den wesentlichen Vorteil, dass er massiv ausgebildet sein kann, wodurch Eigenschwingungen stark reduziert werden und die Übertragung von Schwingungen auf Maschinenteil wird vermieden. Das Füllrohr kann unabhängig vom Amboss optimal an die Befüllbedingungen angepasst werden. So kann das Füllrohr zum Beispiel aus einem elastischen Material bestehen und es kann dünnwandig gestaltet sein. Das Füllrohr kann aus Kunststoff bestehen, es muss nicht unbedingt rohrförmig ausgebildet sein und es muss sich nicht über den gesamten Innenumfang des Schlauches erstrecken und/oder es muss sich nicht bis zur Sonotrodenspitze erstrecken. Die oben genannten Eigenschaften sollen nur aufzeigen, dass das Füllrohr völlig unabhängig vom Ultraschallschwinger sein kann. Dagegen ist der Amboss so gestaltet, dass er relativ steif ist, dass er starr mit dem Haltesystem des Ultraschallschwingers verbunden ist und dass er die Längsränder des Beutelzuschnitts so führt, dass sie an der Schweißstelle die gewünschte Lage, das heißt eine exakte Überlapplage, einnehmen. Da der Amboss zur Sonotrode eine definierte Stellung einnimmt und Resonanzschwingungen am Amboss weitestgehend vermieden werden, besitzt die Ultraschallnaht eine gute Qualität und ist reproduzierbar.

Dabei sind erfindungsgemäß die Führungsabschnitte als Nuten ausgebildet. In diesen Nuten werden die Längsränder des Beutelzuschnitts sowohl hinsichtlich ihrer Eintauch- oder Überlapptiefe als auch hinsichtlich ihres Abstands zur Schweißstelle am Amboss geführt. Derartige Nuten sind relativ einfach herstellbar und ihre Flächen können mit der vorgesehenen Güte gefertigt werden.

Dabei sind die Nuten derart in den Amboss eingebracht, dass sie sich überlappen. Die Längsränder des Beutelzuschnitts werden also bereits vor der Schweißstelle innerhalb des Ambosses so geführt, dass sie einander überlappen und lediglich noch aufeinander gelegt werden müssen. Dabei sind die Nuten in zueinander parallelen Ebenen angeordnet, wobei sie auch unmittelbar vor der Schweißstelle konvergieren können. Dadurch werden die Längsränder aufeinander gelegt und müssen lediglich noch mit der Sonotrode verschweißt werden.

Eine optimale Integration des Ambosses in das Füllrohr erfolgt dadurch, dass das Füllrohr einen in Längsrichtung verlaufenden Ausschnitt aufweist und der Amboss in diesen Ausschnitt eingreift. Aufgrund des Ausschnittes ist das Füllrohr vom Schwinggebilde, insbesondere vom Amboss abgekoppelt und dient lediglich zur Führung des Beutelzuschnitts und zur Befüllung des hergestellten Beutels.

Bei einer anderen Ausführungsform liegt der Amboss radial außerhalb des Füllrohrs und besitzt einen geringen Abstand zu diesem. Oder das Füllrohr kann an dieser Stelle abgeflacht oder radial nach innen eingebeult sein.

Dabei sind bei einer bevorzugten Ausführungsform der den Ausschnitt aufweisende Abschnitt des Füllrohrs und der Amboss vom Beutelzuschnitt umgriffen. Außerhalb des Beutelzuschnitts befindet sich noch der Ambosshalter, wobei in der Übergangsstelle zwischen Amboss und Ambosshalter die beiden Längsränder des Beutelzuschnitts sich befinden, die in den Schlitzen oder Nuten geführt werden. Der Amboss durchgreift also den noch nicht verweißten Beutelzuschnitt, indem der die beiden Längsränder umgeht.

Dabei weist der Amboss eine bezüglich des Füllrohrs radial nach außen weisende Siegelfläche auf. An dieser Siegelfläche liegen die beiden Längsränder des Beutelzuschnitts übereinander und werden mittels der Sonotrode versiegelt beziehungsweise miteinander verschweißt. Der Amboss liegt also radial innen und die Sonotrode radial außen an den Längsändern an.

Bei einem bevorzugten Ausführungsbeispiel weist der Amboss einen, parallel zur Achse des Füllrohrs gesehen, S-förmigen Querschnitt auf. Dieser S-förmige Querschnitt dient dazu, die Längsränder des Beutelzuschnitts zu führen und um die Längsränder des Beutelzuschnitts zu umgehen, um ins Innere des geformten Beutelzuschnitts zu gelangen, und dazu, den Amboss mit dem Ambosshalter zu verbinden, so dass dieser außerhalb des geformten Beutels am Haltesystem befestigt werden kann. Der S-förmige Querschnitt ist dabei so ausgeführt, dass die Schwingungen des Ambosses minimal bleiben, aber die Längsränder dennoch optimal übereinander gelegt werden. Die Nuten erstrecken sich zum Beispiel über zwei Drittel der Breite des Ambosses, so dass sie sich über einen Bereich von etwa einem Drittel der Breite des Ambosses überlappen.

Mit Vorzug sind der Amboss und die Sonotrode an einem gemeinsamen Gestell oder Halter angeordnet. Dieses Gestell ist so ausgeführt, dass es nahezu keine Schwingungen auf das Maschinengestell überträgt, wodurch Geräusche weitestgehend vermieden werden.

Außerdem weist bei einer Weiterbildung der Erfindung das Gestell einen Schlitten für die Sonotrode auf. Über diesen Schlitten kann die Sonotrode radial in Richtung auf das Füllrohr und den Amboss bewegt werden, wobei der Schlitten mit einer bestimmten Kraft, die einstellbar und veränderbar ist, vorgespannt ist. Um den Spalt zwischen dem Amboss, insbesondere der Siegelfläche des Ambosses und der Sonotrode, auf ein vorgebbares Maß konstant zu halten, ist der Schlitten hydraulisch, pneumatisch, servopneumatisch, mittels eines Servomotors oder manuell verfahrbar. Es besteht aber auch die Möglichkeit, dass der Anpressdruck der Sonotrode auf die miteinander zu verschweißenden Längsränder des Beutelzuschnitts konstant gehalten wird. Ferner besteht die Möglichkeit die Schweißkraft und die Spalthöhe auf vorgebbare Werte zu regeln. Auf diese Weise kann insbesondere bei Geschwindigkeitsänderungen die Schweißqualität konstant gehalten werden. Es besteht auch die Möglichkeit, die Sonotrode verschwenkbar aufzuhängen und um den Schwenkpunkt in Richtung des Ambosses oder weg von diesem zu verschwenken.

Die erfindungsgemäße Vorrichtung kann so angeordnet sein dass die Transportrichtung vertikal, horizontal oder eine Zwischenstellung ist. Somit kann sie zum vertikalen Befüllen von Beuteln mit schüttfähigem Gut und zum horizontalen Befüllen von Beuteln mit Stückgut eingesetzt werden.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder beliebiger Kombination erfindungswesentlich sein.

In der Zeichnung zeigen:
- Figur 1: eine perspektivische Ansicht auf die Unterseite der erfindungsgemäßen Vorrichtung;
- Figur 2: eine Seitenansicht auf den Amboss in Richtung des Pfeils II gemäß Figur 1;
- Figur 3: eine Ansicht auf die Unterseite des Ambosses in Richtung des Pfeils III gemäß Figuren 1 und 2;
- Figur 4: eine Seitenansicht auf den Amboss in Richtung des Pfeils IV gemäß Figur 3; und
- Figur 5: eine vergrößerte Wiedergabe des Ausschnitts V gemäß Figur 3.

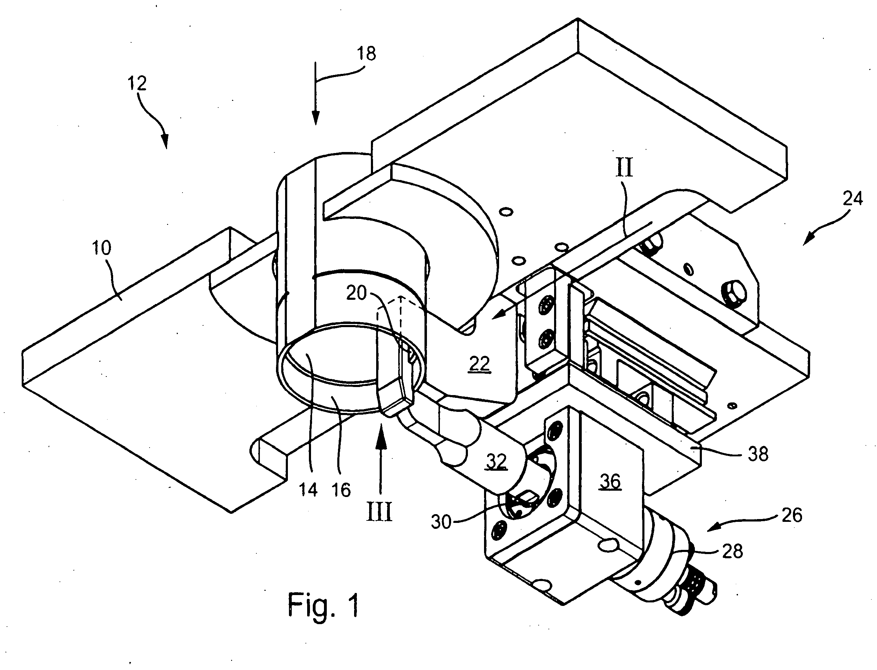

In der Figur 1 ist ein Maschinentisch 10 einer insgesamt mit 12 bezeichneten Vorrichtung zum Herstellen von Schlauchbeuteln erkennbar, in welchem über geeignete Haltemittel ein senkrecht stehendes Füllrohr 14 befestigt ist. Um dieses Füllrohr 14 ist ein Beutelzuschnitt 16 gelegt, der aus einer endlosen Kunststofffolie besteht und von einer Rolle abgezogen, über eine Formschulter geleitet und in eine Schlauchform umgeformt wird. Der Beutelzuschnitt 16 kann auch eine Metallfolie oder ein Laminat sein. Die Transportrichtung ist mit dem Pfeil 18 angedeutet und in de Figur 1 vertikal nach unten gerichtet. Es besteht auch die Möglichkeit, dass die Vorrichtung 12 derart angeordnet ist, das die Transportrichtung 18 waagerecht verläuft.

Im in der Figur 1 dargestellten Bereich des Füllrohrs 14 wird dieses vollständig vom Beutelzuschnitt 16 umschlungen, so dass dieser bereits eine Schlauchform einnimmt, wobei der Schlauch noch randoffen ist. Außerdem ist erkennbar, dass das Füllrohr 14 einen Ausschnitt 20 aufweist, in welchen radial von außen ein insgesamt mit 22 bezeichneter Amboss eingesetzt ist. Dieser Amboss 22 ist an einem insgesamt mit 24 bezeichneten Haltesystem befestigt, an welchem ebenfalls eine Ultraschallsonotrode 26 montiert ist.

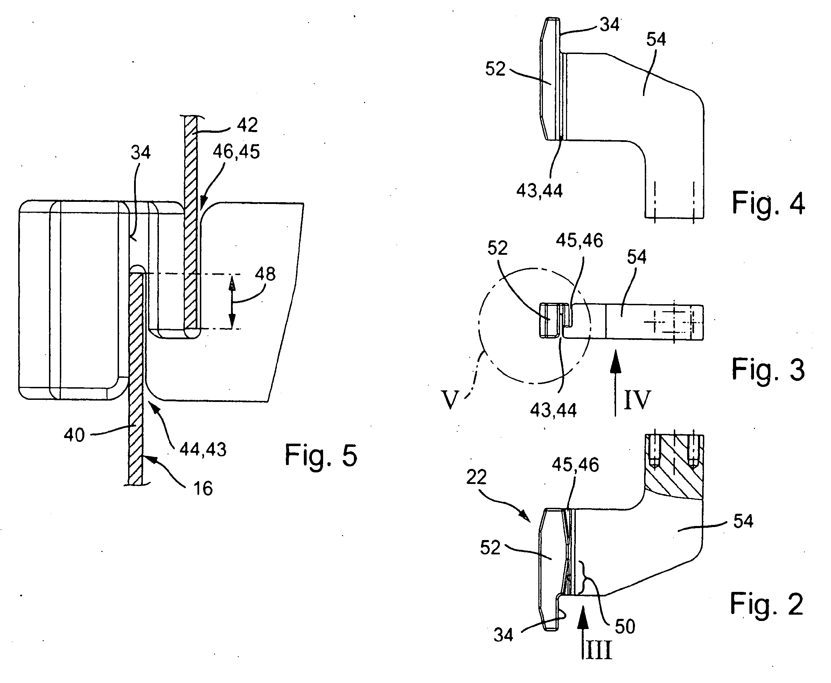

Diese Ultraschallsonotrode 26 besitzt einen Konverter 28, einen Verstärker 30 sowie eine Sonotrodenspitze 32, die in Richtung auf eine Siegelfläche 34 des Ambosses 22 (siehe Figur 2) gerichtet ist. Die Ultraschallsonotrode 26 ist mittels eines Halteblocks 36 an einem Schlitten 38 befestigt, wobei der Schlitten 38 radial zum Füllrohr 14, das heißt in Längsrichtung der Sonotrode 26, verfahrbar am Haltesystem 24 montiert ist. Der Antrieb des Schlittens 38 erfolgt hydraulisch oder pneumatisch. Außerdem kann die Anpresskraft der Sonotrodenspitze 32 am Beutelzuschnitt 16 erfasst und entsprechend die Zustellkraft des Schlittens 38 eingestellt werden.

Der Beutelzuschnitt 16, der in Richtung des Pfeils 18 über das Füllrohr 14 gezogen wird, besitzt zwei Längsränder 40 und 42, die in der Figur 5 andeutungsweise dargestellt sind. Diese Längsränder 40 und 42 befinden sich in Führungsabschnitte 43 und 45 darstellende zwei Nuten 44 und 46 des Ambosses 22, wobei sich die Nuten 44 und 46 in etwa über zwei Drittel der Breite des Ambosses 22 erstrecken, so dass sie sich über etwa ein Drittel der Breite des Ambosses 22 überlappen. Dies bedeutet, dass sich auch die Längsränder 40 und 42 des Beutelzuschnitts 16, wie in der Figur 5 dargestellt, überlappen. In diesem Überlappungsbereich 48 greift die Sonotrodenspitze 32 der Sonotrode 26 an und verschweißt die beiden Längsränder 40 und 42 miteinander, indem sie diese beiden Längsränder 40 und 42 an die Siegelfläche 34 des Ambosses 22 presst. Die beiden Nuten 40 und 46 verlaufen im Wesentlichen in zueinander parallelen Ebenen, wobei sie in einem zur Siegelfläche 34 benachbarten Abschnitt 50 konvergieren, so dass die Längsränder 40 und 42 einander angenähert werden.

Wie aus Figur 3 ersichtlich, besitzt der Amboss 22 parallel zur Transportrichtung 18 gesehen eine im Wesentlichen S-förmige Gestalt, über welche der die Siegelfläche 34 aufweisende Abschnitt 52 mit dem Halteabschnitt 54 verbunden ist. Durch die S-förmige Gestalt wird auch die Übereinanderlage der beiden Längsränder 40 und 42 unmittelbar vor der Siegelfläche 34 ermöglicht.

Die Erfindung besitzt den wesentlichen Vorteil, dass die Sonotrode 26 und der Amboss 22 unabhängig vom Füllrohr 14 sind, so dass die Ultraschallschwingungen nicht auf das Füllrohr 14 oder auf andere Maschinenteile übertragen werden. Außerdem kann der Amboss 22 im Vergleich zum Füllrohr 14 steif ausgebildet werden, so dass an der Siegelfläche 34 hohe Schweißkräfte erzeugt werden können. Ein weiterer Vorteil besteht darin, dass für unterschiedliche Schlauchbeutel lediglich das Füllrohr 14 ausgetauscht werden muss, wohingegen der Amboss 22 sowie die Ultraschallsonotrode 26 unverändert bleiben kann.

## Patentansprüche

1. Vorrichtung (12) zum Verschweißen der Längskanten (40 und 42) eines Beutelzuschnitts (16) zu einer Überlappnaht eines flexiblen Beutels mittels Ultraschall, mit einer Sonotrode (26) und einem Füllrohr (14) zum Befüllen des noch offenen Beutels, **dadurch gekennzeichnet, dass** ein Amboss (22) vorgesehen ist, der als Nuten (44 und 46) ausgebildet Führungsabschnitte (43 und 45) für die miteinander zu verbindenden Längsränder (40 und 42) des Beutelzuschnitts (16) aufweist, wobei sich die Nuten (44 und 46) überlappen, in zueinander parallelen Ebenen angeordnet sind und zumindest abschnittsweise (50) in Transportrichtung (18) des Beutelzuschnitts (16) konvergieren, so dass die Längsnaht eine Überlappnaht ist.

2. Vorrichtung nach Anspruch 1, **dadurch gekennzeichnet, dass** das Füllrohr (14) einen in Längsrichtung verlaufenden Ausschnitt (20) aufweist und der Amboss (22) in diesen Ausschnitt (20) eingreift.

3. Vorrichtung nach einem der vorhergehenden Ansprüche, **dadurch gekennzeichnet, dass** der den Ausschnitt (20) aufweisende Abschnitt des Füllrohrs (14) und der Amboss (22) vom Beutelzuschnitt (16) umgriffen sind.

4. Vorrichtung nach Anspruch 1, **dadurch gekennzeichnet, dass** das Füllrohr (14) einen in Längsrichtung verlaufenden abgeflachten Abschnitt oder eine Einbeulung aufweist und der Amboss (22) radial außerhalb dieses Abschnitts oder dieser Einbeulung sich befindet.

5. Vorrichtung nach einem der vorhergehenden Ansprüche, **dadurch gekennzeichnet, dass** der Amboss (22) eine bezüglich des Füllrohrs (14) radial nach außen weisende Siegelfläche (34) aufweist.

6. Vorrichtung nach einem der vorhergehenden Ansprüche, **dadurch gekennzeichnet, dass** der Amboss (22) einen bezüglich der Längsachse des Füllrohrs (14) gesehenen S-förmigen Querschnitt aufweist.

7. Vorrichtung nach einem der vorhergehenden Ansprüche, **dadurch gekennzeichnet, dass** der Amboss (22) und die Sonotrode (26) an einem gemeinsamen Gestell (24) angeordnet sind.

8. Vorrichtung nach Anspruch 7, **dadurch gekennzeichnet, dass** das Gestell (24) einen Schlitten (38) für die Sonotrode (26) aufweist.

9. Vorrichtung nach Anspruch 8, **dadurch gekennzeichnet, dass** der Schlitten (38) radial in Richtung auf das Füllrohr (14) und den Amboss (22) vorgespannt ist.

10. Vorrichtung nach einem der Ansprüche 8 bis 9, **dadurch gekennzeichnet, dass** der Schlitten (38) mit konstanter Kraft am Amboss (22) oder an den Längsränder (40 und 42) des Beutelzuschnitts (16) anliegt.

11. Vorrichtung nach einem der vorhergehenden Ansprüche, **dadurch gekennzeichnet, dass** eine Schwenkvorrichtung für die Sonotrode (26) vorgesehen ist und die Sonotrode (26) in Richtung auf den Amboss (22) verschwenkbar ist.

12. Vorrichtung, nach Anspruch 10 oder 11, **dadurch gekennzeichnet, dass** der Schlitten (38) oder die Schwenkvorrichtung hydraulisch, pneumatisch, servopneumatisch, mittels eines Servomotors oder manuell verfahrbar bzw. verschwenkbar ist.

13. Vorrichtung nach einem der vorhergehenden Ansprüche, **dadurch gekennzeichnet, dass** die Transportrichtung (18) vertikal, horizontal oder eine dazwischen liegende Richtung ist.

14. Vorrichtung nach einem der vorhergehenden Ansprüche, **dadurch gekennzeichnet, dass** die Schweißkraft und/oder die Spalthöhe auf vorgebbare Werte regelbar ist.

## Claims

1. Device (12) for welding the lateral sides (40 and 42) of a bag blank (16) to an overlap seam of a flexible bag by ultrasonic means, comprising a sonotrode (26) and a filling tube (14) for filling the still open bag, **characterised in that** an anvil (22) is provided which has guiding sections (43 and 45) designed as grooves (44 and 46) for the lateral sides (40 and 42), connected to one another, of the bag blank (16), wherein the overlapping grooves (44 and 46) are arranged parallel to each other and converge at least in portions (50) in a transportation direction (18) of the bag blank (16), so that the longitudinal weld is an overlap seam.

2. Device according to claim 1, **characterized in that** the filling tube (14) has a section (20), running in the longitudinal direction, and the anvil (22) engages in this section (20).

3. Device according to any one of the above claims, **characterized in that** the portion, comprising the section (20), of the filling tube (14) and the anvil (22) are embraced by the bag blank (16).

4. Device according to claim 1, **characterized in that** the filling tube (14) has a flattened portion, running in the longitudinal direction, or an indent and the anvil (22) is located radially outside this segment or this indent.

5. Device according to any one of the above claims, **characterized in that** the anvil (22) has a sealing face (34) pointing radially outwards in relation to the filling tube (14).

6. Device according to any one of the above claims, **characterized in that** the anvil (22) has an S-shaped cross-section seen in relation to the longitudinal axis of the filling tube (14).

7. Device according to any one of the above claims, **characterized in that** the anvil (22) and the sonotrode (26) are placed on a common rack (24).

8. Device according to claim 7, **characterized in that** the rack (24) has a carriage (38) for the sonotrode (26).

9. Device according to claim 8, **characterized in that** the carriage (38) is radially biased in the direction of the filling tube (14) and the anvil (22).

10. Device according to any one of claims 8 to 9, **characterized in that** the carriage (38) rests with constant force against the anvil (22) or the lateral sides (40 and 42) of the bag section (16).

11. Device according to any one of the above claims, **characterized in that** a pivot device is provided for the sonotrode (26) and said sonotrode (26) can be pivoted in the direction of the anvil (22).

12. Device according to claim 10 or 11, **characterized in that** the carriage (38) or the pivot device can be manually displaced and pivoted or hydraulically, pneumatically, servo-pneumatically by means of a servo motor.

13. Device according to any one of the above claims, **characterized in that** the transportation direction (18) is vertical, horizontal or a direction lying in-between.

14. Device according to any one of the above claims, **characterized in that** the welding force and/or gap height can be adjusted to preset values.

## Revendications

1. Dispositif (12) de soudage par ultrasons des bords longitudinaux (40 et 42) d'une ébauche de sachet (16) en vue d'obtenir une soudure à recouvrement d'un sachet flexible, avec une sonotrode (26) et un tube de remplissage (14) pour remplir le sachet encore ouvert, **caractérisé en ce qu'**il est prévu une enclume (22) dotée de portions de guidage (43 et 45) en forme de rainures (44 et 46) pour guider les bords longitudinaux (40 et 42) de l'ébauche de sachet (16) qui doivent être reliés entre eux, les rainures (44 et 46) se chevauchant l'une l'autre, étant agencées dans des plans parallèles entre eux et convergeant au moins en partie (50) dans le sens de déplacement (18) de l'ébauche de sachet (16), de sorte que la soudure longitudinale est une soudure à recouvrement.

2. Dispositif selon la revendication 1, **caractérisé en ce que** le tube de remplissage (14) présente une découpe (20) longitudinale et **en ce que** l'enclume (22) s'engage dans ladite découpe (20).

3. Dispositif selon l'une quelconque des revendications précédentes, **caractérisé en ce que** l'ébauche de sachet (16) enveloppe la portion du tube de remplissage (14) présentant la découpe (20) ainsi que l'enclume (22).

4. Dispositif selon la revendication 1, **caractérisé en ce que** le tube de remplissage (14) présente une portion aplanie qui s'étend dans la direction longitudinale ou un creux et **en ce que** l'enclume (22) se trouve radialement à l'extérieur de cette portion ou de ce creux.

5. Dispositif selon l'une quelconque des revendications précédentes, **caractérisé en ce que** l'enclume (22) présente une surface de scellement (34) orientée radialement vers l'extérieur par rapport au tube de remplissage (14).

6. Dispositif selon l'une quelconque des revendications précédentes, **caractérisé en ce que** l'enclume (22) présente une section transversale en S vue par rapport à l'axe longitudinal du tube de remplissage (14).

7. Dispositif selon l'une quelconque des revendications précédentes, **caractérisé en ce que** l'enclume (22) et la sonotrode (26) sont agencées sur un bâti commun (24).

8. Dispositif selon la revendication 7, **caractérisé en ce que** le bâti (24) présente un chariot (38) pour la sonotrode (26).

9. Dispositif selon la revendication 8, **caractérisé en ce que** le chariot (38) est précontraint radialement en direction du tube de remplissage (14) et de l'enclume (22).

10. Dispositif selon l'une des revendications 8 à 9, **caractérisé en ce que** le chariot (38) appuie avec une force constante contre l'enclume (22) ou les bords longitudinaux (40 et 42) de l'ébauche de sachet (16).

11. Dispositif selon l'une quelconque des revendications précédentes, **caractérisé en ce qu'**il est prévu pour la sonotrode (26) un dispositif de basculement et **en ce que** la sonotrode (26) peut basculer en direction de l'enclume (22).

12. Dispositif selon la revendication 10 ou la revendication 11, **caractérisé en ce que** le chariot (38) ou le dispositif de basculement peut être basculé ou déplacé selon un procédé hydraulique, pneumatique ou servopneumatique, au moyen d'un servomoteur ou manuellement.

13. Dispositif selon l'une quelconque des revendications précédentes, **caractérisé en ce que** le dispositif de transport (18) est agencé selon une direction verticale, horizontale ou intermédiaire.

14. Dispositif selon l'une quelconque des revendications précédentes, **caractérisé en ce que** la force de soudage et/ou la hauteur d'interstice peuvent être réglées à des valeurs prédéfinissables.
